# EUROPÄISCHE PATENTSCHRIFT

(11) **EP 1 779 493 B1**
(45) Veröffentlichungstag und Bekanntmachung des Hinweises auf die Patenterteilung: **05.01.2011**
(21) Anmeldenummer: 05763934.6
(22) Anmeldetag: 30.06.2005
(51) Int. Cl.: H02K 1/14

(54) **HAUPTELEMENT FÜR EINE ELEKTRISCHE MASCHINE**
ELECTRIC MACHINE MAIN ELEMENT
ELEMENT PRINCIPAL POUR UNE MACHINE ELECTRIQUE

(30) Priorität: 12.08.2004 DE 102004039180
(43) Veröffentlichungstag der Anmeldung: 02.05.2007
(73) Patentinhaber: ROBERT BOSCH GMBH, 70442 Stuttgart (DE)
(72) Erfinder: EVANS, Steven-Andrew, 77813 Buehl (DE)
(86) Internationale Anmeldenummer: PCT/EP2005/053099
(87) Internationale Veröffentlichungsnummer: WO 2006/018346

(56) Entgegenhaltungen:
- WO-A-02/058210
- WO-A-2004/098023
- US-A1- 2004 007 936

## Beschreibung

### Stand der Technik

Die Erfindung geht aus von einem als Rotor oder Stator einsetzbaren Hauptelement für eine elektrische Maschine, insbesondere für einen Gleichstrom-Kleinmotor, nach dem Oberbegriff des Anspruchs 1.

Die magnetisch leitfähigen Körper von Statoren oder Rotoren einer elektrischen Maschine werden zunehmend aus SMC-Material (Soft Magnetic Powder Iron Composite) hergestellt und verdrängen insbesondere bei Gleichstromkleinmotoren die laminierten Eisenkörper oder Blechpakete, da sie fertigungstechnisch sehr viel einfacher herstellbar sind. Darüber hinaus bietet das SMC-Material weitere Vorteile im Vergleich zu Stator- oder Rotorkörper aus Blechlamellenpaketen, so die Reduktion von Eisenverlusten bei hohen Frequenzen bei Motoren mit hoher Drehzahl oder einer großen Polzahl, eine verbesserte thermische Charakteristik durch den Gebrauch von dünnen Zahnisolationen, da die Zähne ohne scharfe Ecken und Kanten gepresst werden können, und eine hohe Flexibilität im Design des Motors. Das SMC-Material wird üblicherweise mittels eines Presswerkzeugs in die gewünschte Form des Stators oder Rotors gepresst und dann bei einer relativ niedrigen Temperatur von beispielsweise bis zu 500°C wärmebehandelt. Bei der Pressung muss eine relativ hohe Dichte des Materials erreicht werden, die der von Eisen (7,8 g/cm³) möglichst nahe kommt. Eine solche Dichte kann nur dann erreicht werden, wenn das Formverhältnis des Presslings (aspect ratio) möglichst groß ist. Als Grenzwert hat sich dabei ein Formverhältnis von 1:15 herausgestellt. Unter Formverhältnis wird das Verhältnis der kleinsten Abmessung des quer zur Pressrichtung sich erstreckenden Querschnitts des Presslings zur Länge des Presslings in Pressrichtung verstanden.

Zur Einhaltung eines solchen Formverhältnisses ist bei einem bekannten, mehrpoligen Stator aus SMC-Material für eine Innenläufermaschine (WO 99/50949) der außenliegende Rückschlussring, auch Rückschlussjoch genannt, aus einer der Zähnezahl der Statorzähne entsprechenden Anzahl von Ringsegmenten in Umfangsrichtung zusammengesetzt. Jedes Ringsegment des Rückschlussrings trägt einstückig einen Statorzahn mit einem Zahnhals und einem den Zahnhals an dessen rückschlussringfernem Ende begrenzenden Zahnschuh. Jedes Ringsegment mit Zahnhals und Zahnschuh ist aus SMC-Material durch Pressen und Wärmebehandlung hergestellt. Die Zahnhälse sind an ihren axialen Enden abgerundet oder weisen ein ovales Profil auf, so dass infolge Wegfall von scharfen Kanten an den Zahnhälsen nur eine dünne Isolierschicht aufgebracht werden muss, auf die dann die Ringspule aufgewickelt werden kann. Die einzelnen Ringspulen der Statorwicklung werden direkt auf die Zahnhälse mit herkömmlicher maschineller Wickeltechnik aufgewickelt. Nach Aufwicklung der Ringspulen werden die einzelnen Ringsegmente in Umfangrichtung aneinandergesetzt und fest miteinander verbunden.

Bei einem ebenfalls bekannten Stator aus SMC-Material für eine Innenläufermaschine (WO 00/69047) wird der Rückschlussring einerseits und die Statorzähne mit Zahnhals und Zahnschuh andererseits getrennt aus SMC-material in der gewünschten Form hergestellt. Nach Aufschieben der vorgefertigten Ringspulen auf die Zahnhälse werden die Statorzähne mit den zahnschuhfernen Enden der Zahnhälse in vorbereitete Ausnehmungen im Rückschlussring formschlüssig eingesetzt und an diesen befestigt.

Mit der WO 02/058210 A1 ist ein Stator bzw. Rotor einer elektrischen Maschine bekannt geworden, bei dem beispielsweise zwei Bauelemente axial zu einem Stator zusammengesetzt werden. Beide Bauelemente weisen jeweils ein Rückschlusselement auf, an dem Statorzähne angeformt sind, die axial ineinandergreifen.

Die US 2004/0007936 A1 zeigt eine elektrische Klauenpolmaschine, bei der ein Zwischenbauteil zwischen zwei identischen Außenbauteilen angeordnet ist. Die Statorzähne sind dabei am Zwischenbauteil angeordnet, wobei radial innen liegende axiale Fortsätze der Außenbauteile axial in das Zwischenbauteil greifen. Dabei können zwei auf diese Weise gebildeten Baueinheiten axial nebeneinander angeordnet werden.

### Vorteile der Erfindung

Das erfindungsgemäße Hauptelement für eine elektrische Maschine mit dem Merkmalen des Anspruchs 1 hat demgegenüber den Vorteil, dass die einzelnen, aus SMC-Material gefertigten Module einerseits ein relativ großes Formverhältnis in axialer Pressrichtung haben und daher mit großer Materialdichte hergestellt werden können und andererseits durch Aneinanderfügen von nur wenigen Modulen aus nur zwei Modulvarianten sich eine große axiale Länge des Hauptelements darstellen lässt. Dies erlaubt die kostengünstige Herstellung von im Durchmesser kleinen elektrischen Maschinen mit einer großen axialen Länge zur Erzielung einer hohen Leistung, insbesondere von Kleinmotoren für Anwendungszwecke in Kraftfahrzeugen, z.B. Gleichstrommotoren für Sitzverstellung und Fensterantrieb oder bürstenlosen Gleichstrommotoren für die Benzindirekteinspritzung. Unabhängig von der Polzahl oder der Zähnezahl der elektrischen Maschine sind für einen Rotor oder Stator größerer Länge nur vier SMC-Körper mit nur zwei Pressformen zu pressen und dann zu fügen. Diese Zahl an SMC-Einzelteilen liegt weit unter der Zahl der SMC-Bauelemente, die bei den eingangs beschriebenen, bekannten SMC-Statoren gepresst und montiert werden müssen, um den fertigen Stator zu erhalten. Dabei sind zwei identische Module als Außenmodule außenliegend und zwei identische Module als Zwischenmodule zwischen den Außenmodulen angeordnet.

Durch die in den weiteren Ansprüchen aufgeführten Maßnahmen sind vorteilhafte Weiterbildungen und Verbesserungen des im Anspruch 1 angegebenen Hauptelements einer elektrischen Maschine möglich.

Gemäß der Erfindung sind die Außenmodule so geformt, dass bei Entfernen der beiden Zwischenmodule die beiden Außenmodule zu einem axial verkürzten Rückschlussring mit angeformten Zähnen aneinandersetzbar sind. Dies hat den Vorteil, dass die elektrische Maschine gleicher Bauart je nach Leistungsbedarf ohne konstruktive oder fertigungstechnische Änderungen nach dem Baukastenprinzip einmal mit großer und einmal mit kleiner axialer Baulänge und damit mit größerer oder kleinerer Leistung hergestellt werden kann. Hierzu sind lediglich von den für eine lange Maschine erforderlichen Modulen die beiden Zwischenmodule wegzulassen, um eine Maschine mit kleiner axialer Baulänge und entsprechend geringerer Leistung zu erhalten.

### Zeichnung

Die Erfindung ist anhand eines in der Zeichnung dargestellten Ausführungsbeispiels in der nachfolgenden Beschreibung näher erläutert. Es zeigen:
- Fig. 1: eine perspektivische Darstellung eines wicklungslosen Stators aus SMC-Material von großer axialer Baulänge für einen Innenläufermotor,
- Fig. 2: eine Draufsicht des bewickelten Stators in Richtung Pfeil II in Fig. 1,
- Fig. 3: einen Schnitt des wicklungslosen Stators längs der Linie III - III in Fig. 2,
- Fig. 4: einen Schnitt eines Zahnen des Stators längs der Linie IV - IV in Fig. 3,
- Fig. 5: eine Explosionsdarstellung des mittig getrennten Stators in Fig. 1, wobei jede Statorhälfte zwei Module unterschiedlicher Ausgestaltung umfasst,

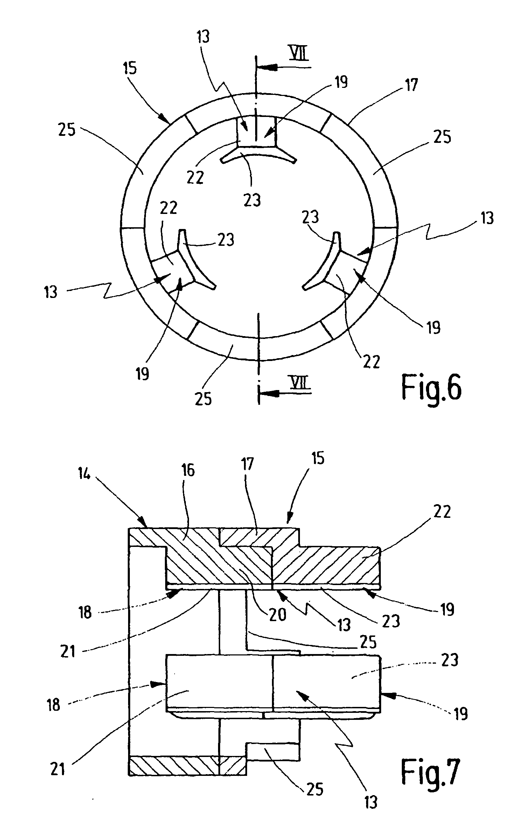

- Fig. 6: eine Stirnansicht der einen Statorhälfte in Richtung Pfeil VI in Fig. 5,
- Fig. 7: einen Schnitt längs der Linie VII - VII in Fig. 6,
- Fig. 8: eine Explosionsdarstellung einer Statorhälfte in Fig. 5,
- Fig. 9: eine Stirnansicht des in Fig. 8 linken Moduls, in Richtung Pfeil IX,
- Fig. 10: einen Schnitt längs der Linie X - X in Fig. 9,
- Fig. 11: eine Stirnansicht des in Fig. 8 rechten Moduls in Richtung Pfeil XI,
- Fig. 12: einen Schnitt längs der Linie XII - XII in Fig. 11,
- Fig. 13: eine Explosionsdarstellung eines wicklungslosen Stators mit verkürzter axialer Baulänge,
- Fig. 14: eine perspektivische Ansicht des Stators in Fig. 13,
- Fig. 15: eine Stirnansicht des Stators in Fig. 14,
- Fig. 16: einen Schnitt längs der Linie XVI - XVI in Fig. 15,
- Fig. 17: einen Schnitt eines Zahns des Stators längs der Linie XVII - XVII in Fig. 16.

### Beschreibung des Ausführungsbeispiels

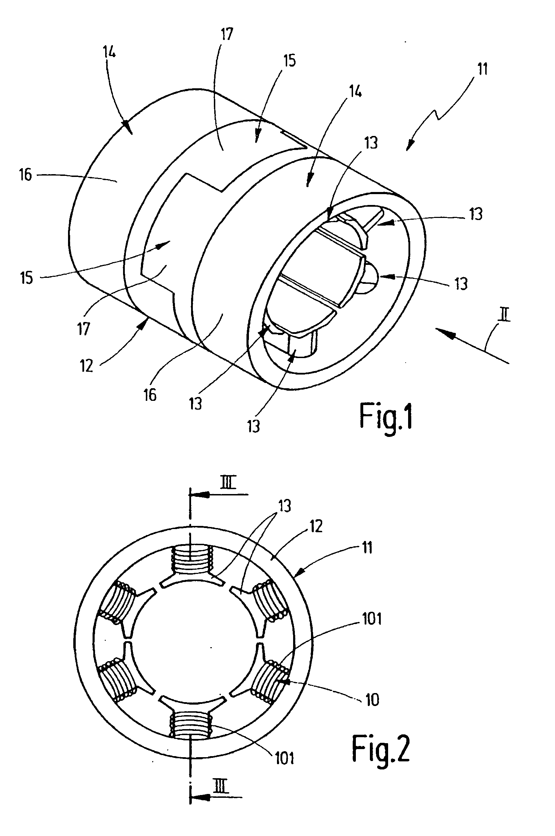

In Fig. 1 bis 3 ist ein als Stator eingesetztes Hauptelement eines dreiphasigen, mehrpoligen, z.B. vierpoligen, bürstenlosen Innenläufer-Gleichstrommotors als Ausführungsbeispiel für ein Hauptelement einer elektrischen Maschine in perspektivischer Ansicht, in Stirnansicht und im Längsschnitt dargestellt. Der Stator weist einen aus magnetisch leitfähigem SMC-Material (Soft Magnetic Powder Iron Composite) hergestellten SMC-Körper 11 mit einem Rückschlussjoch oder Rückschlussring 12 und mit am Rückschlussring 12 einstückig angeformten, radial nach innen abstehenden Zähnen 13, die um gleiche Umfangswinkel zueinander versetzt sind, sowie eine in Fig. 2 schematisch angedeutete Statorwicklung 10 auf, die in Form von einzelnen Ringspulen 101 auf die Zähne 13 aufgewickelt ist. Der SMC-Körper 11 besteht aus insgesamt vier separat gefertigten, axial fluchtend aneinandergesetzten Modulen, von denen jeweils zwei Module identisch ausgebildet und beim Aneinandersetzen gegeneinander um 180° in der von den Modulachsen aufgespannten Ebene gedreht sind. Dabei sind zwei identische Module als Außenmodule 14 außenliegend und zwei identische Module als Zwischenmodule 15 zwischen den Außenmodulen 14 angeordnet. Zur Herstellung der Module 14, 15 wird SMC-Eisenpulver in einer Pressform, die die Form der Außenmodule 14 bzw. der Zwischenmodule 15 vorgibt, gepresst, wobei die Pressung in axialer Richtung der Module 14, 15 erfolgt, und anschließend thermisch behandelt. Die Module 14, 15 werden dabei auf eine Dichte von ca. 7,3 g/cm³ oder größer gepresst. Die thermische Behandlung erfolgt beispielsweise über ca. 30 min in Luftatmosphäre bei einer Temperatur von ca. 500C°. Damit die angegebene, gewünschte hohe Dichte des Eisenpulvers in den Modulen 14, 15 erreicht wird, ist jedes Modul 14, 15 so geformt, dass sein sog. Formverhältnis (aspect ratio) einen Grenzwert von 1:15 nicht unterschreitet. Unter Formverhältnis wird das Verhältnis der kleinsten Abmessung des Presslings quer zur Pressrichtung zu der Abmessung des Presslings in Pressrichtung definiert. Da bei den Modulen 14, 15 die Pressung des Eisenpulvers in Achsrichtung der Module 14, 15, erfolgt, ist die axiale Länge der einzelnen Module 14, 15 so gewählt, dass das Formverhältnis an keiner Stelle des Moduls kleiner als das vorgegebenen minimale Verhältnis ist.

Die Module 14, 15 weisen jeweils ein ringförmiges Rückschlusselement oder -segment 16 bzw. 17 und eine gleiche Zahl von um gleiche Umfangswinkel am Rückschlusssegment 16 bzw. 17 versetzten Modulzähnen 18, 19 auf. Jedes Rückschlusssegment 16, 17 bildet einen von vier axialen Abschnitten des Rückschlussrings 12, und die Modulzähne 18, 19, die einseitig über das zugeordnete Rückschlusssegment 16 bzw. 17 vorstehen, bilden mit Zusammensetzen der Module 14, 15 die Zähne 13 des SMC-Körpers 11. Die Zahl der Modulzähne 18 bzw. 19 an jedem Außenmodul 14 bzw. Zwischenmodul 15 ist halb so große wie die Zahl der Zähne 13 des SMC-Körpers 11.

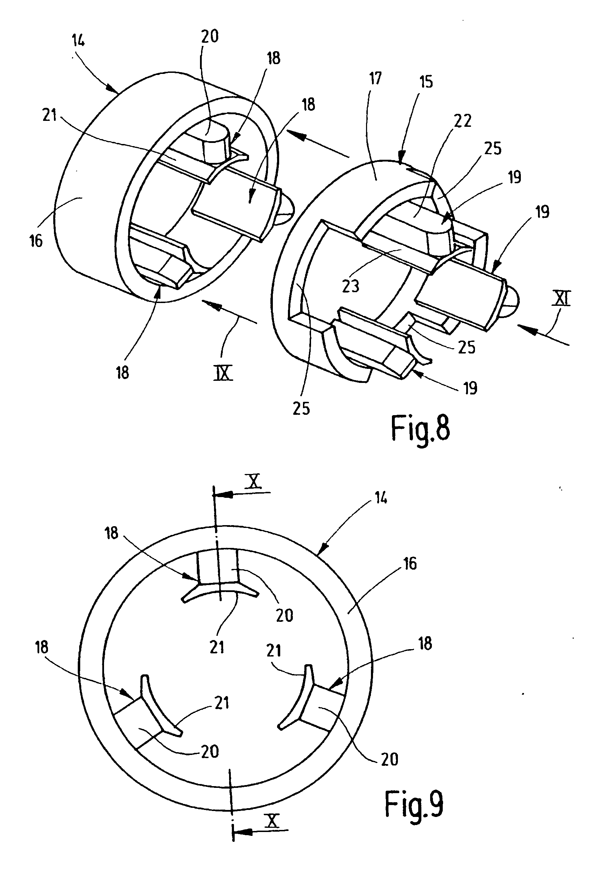

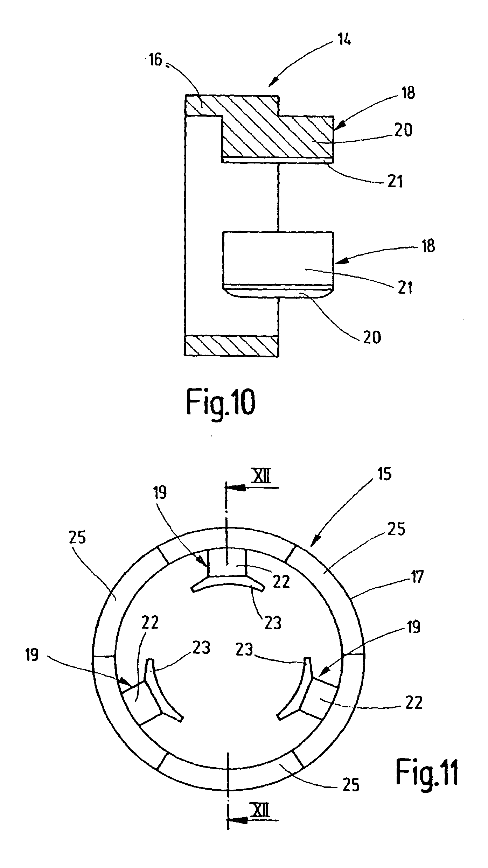

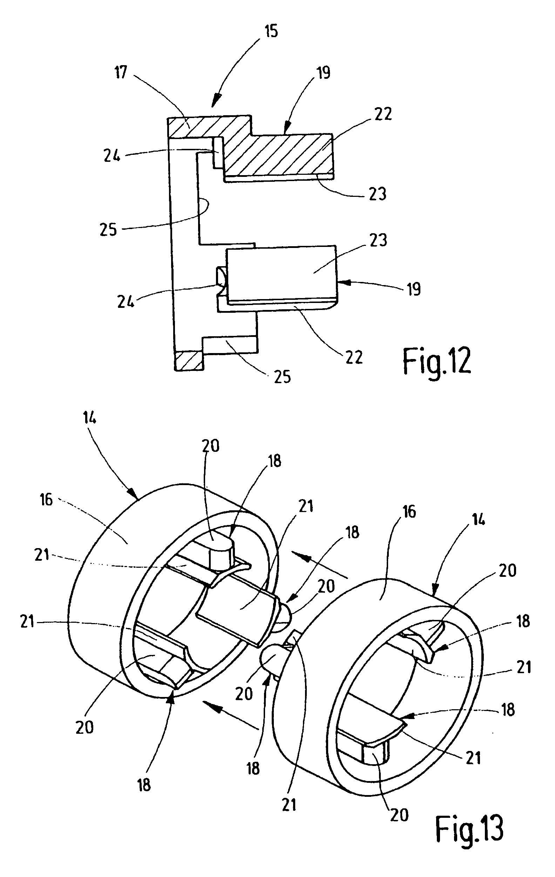

In Fig. 8 ist von den beiden identischen Außenmodulen 14 und den beiden identischen Zwischenmodulen 15 jeweils eines perspektivisch dargestellt. Fig. 9 und 10 zeigen das Außenmodul 14 in Stirnansicht und im Längsschnitt. Fig. 11 und 12 zeigen das Zwischenmodul 15 in Stirnansicht und im Längsschnitt.

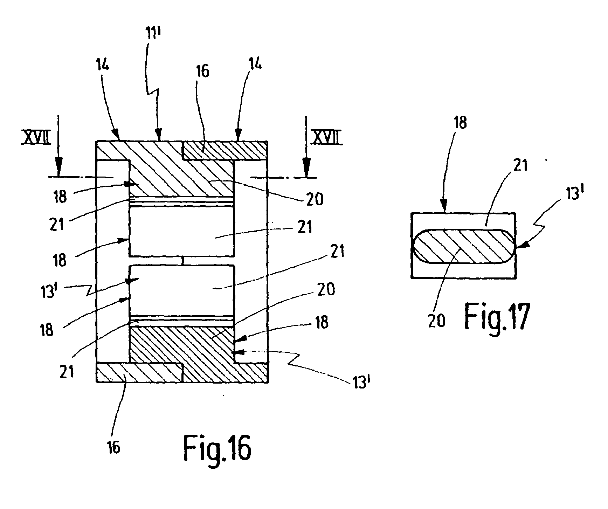

Entsprechend dem vorher Gesagten besitzt das Außenmodul 14 drei um gleiche Umfangswinkel zueinander an der Innenwand des Rückschlusssegments 16 versetzt angeordnete Modulzähne 18, die einstückig mit dem Rückschlusssegment 16 ausgeführt sind. Jeder Modulzahn 18 weist einen Zahnhals oder Zahnschaft 20 und einen Zahnschuh 21 auf, der an dem vom Rückschlusssegment 16 abgekehrten Ende des Zahnschaftes 20 angeordnet ist und an den voneinander abgekehrten, sich in Axialrichtung erstreckenden Längsseiten des Zahnschaftes 20, also in Umfangsrichtung, über den Zahnschaft 20 vorsteht. Die Zahnschuhe 21 haben eine gleiche axiale Länge wie die Zahnschäfte 20. Die Zahnschäfte 20 sind an ihren Stirnseiten abgerundet, wie dies in Fig. 17 zu erkennen ist. Zahnschäfte 20 und Zahnschuhe 21 stehen mit einem Teil ihrer Axiallänge, im Beispiel mit der halben Axiallänge, einseitig über das Rückschlusssegment 16 vor. Die Anzahl der Modulzähne 18 ist halb so groß, wie die Gesamtzahl der Zähne 13 am Rückschlussring 12 des SMC-Körpers 11.

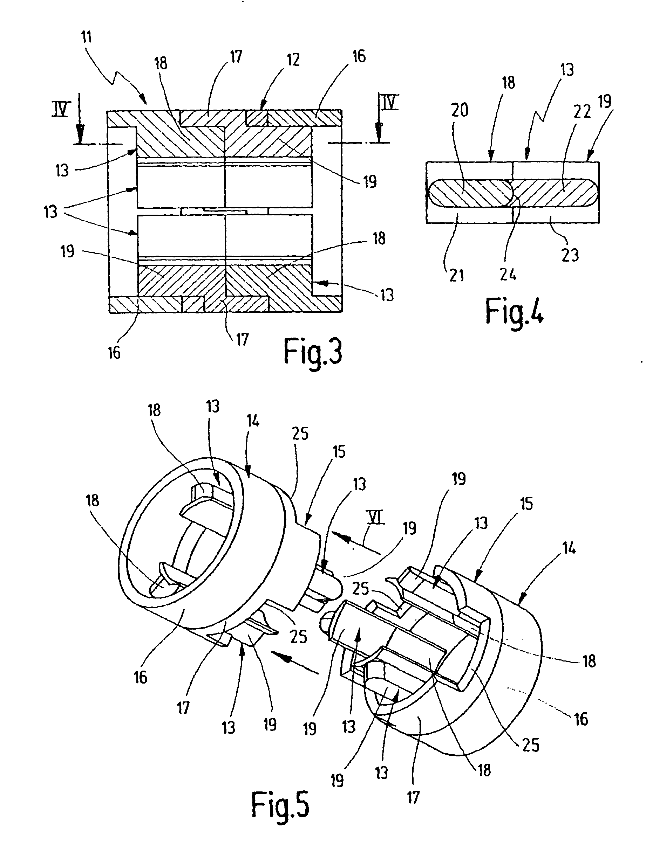

In Fig. 11 und 12 ist das Zwischenmodul 15 in Stirnansicht und im Längsschnitt dargestellt. Am Rückschlusssegment 17 sind wiederum die drei Modulzähne 19 um gleiche Umfangswinkel zueinander versetzt einstückig an der Innenwand des Rückschlusssegments 17 angeformt. Die Anzahl der Modulzähne 19 ist halb so groß wie die Gesamtzahl der Zähne 13 am Rückschlussring 12 des SMC-Körpers 11. In gleicher Weise wie beim Außenmodul 14 besitzt jeder Modulzahn 19 einen Zahnhals oder Zahnschaft 22 und einen Zahnschuh 23, die in gleicher Weise ausgebildet sind wie bei den Modulzähne 18 am Rückschlusssegment 16. Die Modulzähne 19, die die gleiche Axiallänge besitzen wie die Modulzähne 18, stehen aber mit einer größeren axialen Länge über die Stirnseite des Rückschlusssegments 17 vor, so dass die Übergangsfläche von Zahnschaft 22 zum Rückschlusssegment 17 kleiner ist als bei dem Außenmodul 14. Die außerhalb des Rückschlusssegments 17 liegenden Stirnenden der Zahnschäfte 22 sind - wie die Zahnschäfte 20 der Modulzähne 18 am Außenmodul 14 - abgerundet. Die innerhalb des Rückschlusssegments 17 liegenden Stirnenden der Zahnschäfte 22 sind jeweils mit einer konkaven Einwölbung 24 versehen, die einen gleichen Wölbungsradius aufweist wie die Rundungen der Zahnschäfte 22 an dem anderen Stirnende der Zahnschäfte 22 bzw. an den Stirnenden der Zahnschäfte 20 in dem Außenmodul 14. Die Zahnschuhe 23 sind gegenüber den Zahnschäfte 22 an dem die Einwölbung 24 tragenden Stirnende der Zahnschäfte 22 verkürzt und reichen nur bis an die tiefste Stelle der Einwölbung 24, wie dies in Fig. 12 und auch in Fig. 4 zu sehen ist.

Wie aus Fig. 8 und Fig. 12 zu erkennen ist, weist das Rückschlusssegment 17 des Zwischenmoduls 15 drei um gleiche Umfangswinkel zueinander versetzt angeordnete Aussparungen 25 auf, die von derjenigen Stirnseite des Rückschlusssegments 17 aus eingebracht sind, an der die Modulzähne 19 vorstehen. Die Aussparungen 25 haben gleiche Abmessungen in Axial- und Umfangsrichtung. Sie sind mittig zwischen den Modulzähnen 19 angeordnet. Wie in Fig. 5 illustriert ist, nehmen die Aussparungen 25 die die Modulzähne 19 tragenden Bereiche des Rückschlusssegments 17 des anderen Zwischenmoduls 15 auf. Dadurch wird einerseits sichergestellt, dass eine ausreichend große Verbindungsfläche zwischen Rückschlusssegment 17 und Modulzahn 19 vorhanden ist und andererseits eine drehsteife Verbindung zwischen den aneinandergesetzten Zwischenmodulen 15 besteht.

Um - wie eingangs beschrieben worden ist - bei der Herstellung der Module 14, 15 durch axiales Pressen des SMC-Pulvers das geforderte Formverhältnis möglichst groß zu machen, ist bei einer beispielhaften radialen Dicke oder Stärke der Rückschlusssegmente 16, 17 von 6 mm die axiale Länge der Rückschlusssegmente 16, 17 ca. 25 mm gewählt, was ein Formverhältnis von ca. 1:4 ergibt. An den kritischen Stellen der Module 14, 15, nämlich an den relativ dünnen Zahnschuhen 21, 23 mit einer radialen Dicke von ca. 2 mm, ergibt sich damit noch ein im Toleranzbereich liegendes Formverhältnis von ca. 1:12.

Zur Herstellung des in Fig. 1 bis 3 dargestellten SMC-Körpers 11 werden - wie bereits beschrieben - zwei Außenmodule 14 und zwei Zwischenmodule 15 axial aneinandergereiht. Hierzu wird zunächst - wie dies in Fig. 8 dargestellt ist - ein Zwischenmodule 15 auf einen Außenmodul 14 axial aufgesetzt, und zwar so, dass die Modulzähne 18 und 19 miteinander fluchten. Am Ende der durch die Pfeile markierten Aufsetzbewegung dringen die Rundungen an den Modulzähnen 18 in die Einwölbungen 24 an den Modulzähnen 19 ein, und die Zahnschuhe 21 und 23 liegen ebenso plan aneinander wie die einander zugekehrten Stirnflächen der Rückschlusssegmente 16 und 17. Durch die in die Einwölbungen 24 der Zahnschäfte 22 eindringenden Zahnschäfte 20 wird ein Verdrehen der beiden Module 14, 15 relativ zueinander verhindert, was das Aufbringen der Ringspulen auf die aus den Modulzähnen 18, 19 zusammengesetzten Zähne 13 erleichtert. Jeder Zahn 13 des SMC-Körpers 11 wird dabei in Achsrichtung zur Hälfte von einem Modulzahn 18 und einem Modulzahn 19 gebildet. Auf jeden Zahn 13 wird nunmehr eine Ringspule 101 der Statorwicklung 10 aufgewickelt, wie dies in Fig. 2 schematisch angedeutet ist. Zwei solcher, jeweils aus einem Außenmodul 14 und einem Zwischenmodul 15 zusammengesetzter Komponenten des SMC-Körpers 11, die jeweils die Hälfte der Gesamtzahl der Zähne 13 und entsprechend die Hälfte der Gesamtzahl der Ringspulen 101 der Statorwicklung 10 tragen, werden axial zu dem SMC-Körper 11 mit Statorwicklung 10 zusammengesetzt, wobei vor dem Fügen die eine Komponente aus Außenmodul 14 und Zwischenmodul 15 in der Ebene, in der die Modulachsen liegen, um 180° gegenüber der anderen Komponente aus Außenmodul 14 und Zwischenmodul 15 gedreht wird, so dass die beiden Zwischenmodule 15 einander zugekehrt sind, wie dies in Fig. 5 perspektivisch dargestellt ist. Zusätzlich wird noch das eine Außenmodul 14 und das damit starr verbundene Zwischenmodul 15 gegenüber dem anderen Außenmodul 14 und dem damit starr verbundenen Zwischenmodul 15 um einen solchen Winkel in Umfangsrichtung gedreht, dass die Zähne 13 der einen Komponente des SMC-Körpers 11 auf Lücke zu den Zähnen 13 der anderen Komponente des SMC-Körpers 11 stehen. Bei der dargestellten Ausführung des SMC-Körpers 11 mit sechs Zähnen 13 beträgt der Verdrehungswinkel 60°. Allgemein beträgt der Verdrehungswinkel 360°/N, wenn N die Gesamtzahl der am SMC-Körper 11 vorhandenen Zähne 13 ist. Die beiden Komponenten des SMC-Körpers 11 werden in dieser Ausrichtung, wie sie auch in Fig. 5 zu sehen ist, axial in Pfeilrichtung ineinandergeschoben, wobei wechselseitig die die Modulzähne 18 tragenden Bereiche oder Abschnitte der Rückschlusssegmente 17 des einen Zwischenmoduls 15 in die Aussparungen 25 im jeweils anderen Zwischenmodul 15 formschlüssig eindringen. Am Ende des Fügungsvorgangs ergibt sich der in Fig. 1 perspektivisch und in Fig. 3 im Längsschnitt jeweils ohne Statorwicklung 10 dargestellte Stator.

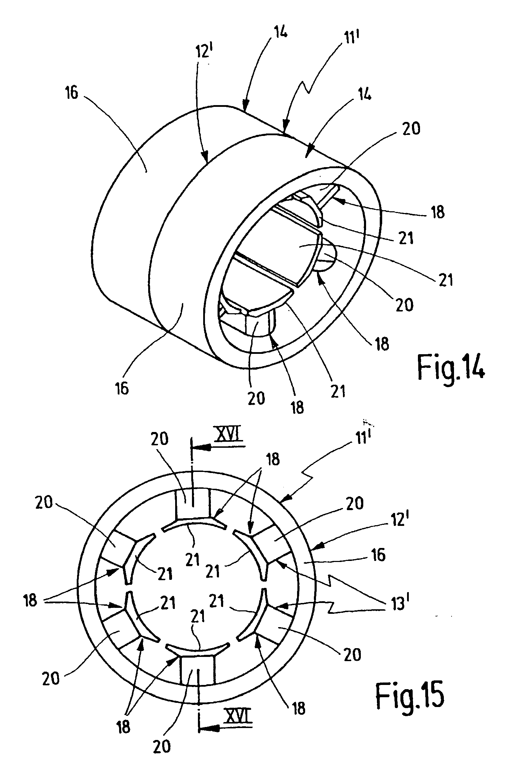

Der vorstehend beschriebene Aufbau des SMC-Körpers 11 hat den zusätzlichen Vorteil, dass ohne konstruktive und fertigungstechnische Änderungen sich eine elektrische Maschine, insbesondere ein Gleichstrommotor, gleicher Bauart mit verkürzter, axialer Länge realisieren lässt. Hierzu werden - wie dies in Fig. 13 bis 16 dargestellt ist - die beiden Zwischenmodule 15 zwischen den Außenmodulen 14 entfernt und die Außenmodule 14 unmittelbar in der in Fig. 13 durch die Pfeile angedeuteten Axialrichtung aneinandergefügt. Die beiden Außenmodule 14 sind dabei in gleicher Weise ausgerichtet wie vorstehend beschrieben, so dass ihre Stirnseiten, an denen die Modulzähne 18 axial vorstehen, einander zugekehrt sind und die Modulzähne 18 in dem einen Außenmodul 14 auf Lücke zu den Modulzähnen 18 im anderen Außenmodul 14 stehen. Vor dem Zusammenfügen der Außenmodule werden die Ringspulen der Statorwicklung auf die Modulzähne 18 beider Außenmodule 14 aufgewickelt. Der zusammengesetzte SMC-Körper 11 mit axial verkürzter Baulänge ist in Fig. 14 perspektivisch, in Fig. 15 in Stirnansicht und in Fig. 16 im Längsschnitt dargestellt. Die Rückschlusssegmente 16 der beiden aneinanderliegenden und drehfest miteinander verbundenen Außenmodule 14 bilden den Rückschlussring 11' des axial verkürzten Stators, und jeweils ein Modulzahn 18 der beiden Außenmodule 14 bildet einen Zahn 13' des axial verkürzten Stators. Da im Ausführungsbeispiel jedes Außenmodul 14 jeweils drei Modulzähne 18 trägt, ergibt sich wiederum die Gesamtzahl von sechs Zähnen 13' am verkürzten Stator.

Die Erfindung ist nicht auf den beispielhaft beschriebenen Stator für eine Innenläufermaschine beschränkt. So kann in gleicher Weise auch ein Stator für eine Außenläufermaschine aufgebaut werden. Ebenso ist die erfindungsgemäße Zusammensetzung des SMC-Körpers auch bei Rotoren für elektrische Maschinen mit gleichen Vorteilen vornehmbar.

## Patentansprüche

1. Als Rotor oder Stator einsetzbares Hauptelement für eine elektrische Maschine, insbesondere für einen Gleichstrom-Kleinmotor, mit einem magnetisch leitfähigen Körper (11) aus SMC - Material der einen Rückschlussring (12) und am Rückschlussring (12) einstückig angeformte, radial abstehende Zähne (13) aufweist, die um Umfangswinkel zueinander versetzt sind, wobei der Körper (11) aus mehreren separat gefertigten, axial fluchtend aneinandergesetzten Modulen (14, 15) besteht, von denen zwei Module (14 bzw. 15) identisch ausgebildet und beim Aneinandersetzen gegeneinander um 180° in der von den Modulachsen aufgespannten Ebene gedreht sind, wobei zwei identische Module als Außenmodule (14) außenliegend und zwei identische Module als Zwischenmodule (15) zwischen den Außenmodulen (14) angeordnet sind, **dadurch gekennzeichnet, dass** wechselseitig die Modulzähne (13, 18) tragenden Bereiche oder Abschnitte der den Rückschlussring (12) bildenden Rückschlusssegmente (17) des einen Zwischenmoduls (15) in Aussparungen (25) im jeweils anderen Zwischenmodul (15) formschlüssig eindringen, wobei die beiden Außenmodule (14) derart geformt sind, das bei Entfernen der beiden Zwischenmodule (15) die beiden Außenmodule (14) zu einem axial verkürzten Körper (11) aneinander fügbar sind.

2. Hauptelement nach Anspruch 1, **dadurch gekennzeichnet, dass** der Körper (11) insgesamt genau vier Module aufweist.

3. Hauptelement nach einem der Ansprüche 1 oder 2 **dadurch gekennzeichnet, dass** die Module (14, 15) jeweils ein einen axialen Abschnitt des Rückschlussrings (12) bildendes, ringförmiges Rückschlusssegment (16, 17) und eine gleiche Zahl von um gleiche Umfangswinkel am Rückschlusssegment (16, 17) versetzte, axial einseitig über das Rückschlusssegment (16, 17) vorstehende Modulzähne (18, 19) aufweist, die mit Zusammensetzen der Module (14, 15) die Zähne (13) des SMC-Körpers (11) bilden.

4. Hauptelement nach Anspruch 3, **dadurch gekennzeichnet, dass** die Zahl der Modulzähne (18, 19) an jedem Modul (14, 15) halb so groß ist wie die Zähnezahl des SMC-Körpers (11).

5. Hauptelement nach Anspruch 3 oder 4, **dadurch gekennzeichnet, dass** jeweils ein Zwischenmodul (15) an einem Außenmodul (14) so angesetzt ist, dass die Modulzähne (18, 19) axial fluchtend aneinanderstoßen und dass die Außenmodule (14) mit den angesetzten Zwischenmodulen (15) um ihre Modulachsen relativ zueinander um einen Winkel von 360°/N verdreht sind, wobei N die Zähnezahl des SMC-Körpers (11) ist.

6. Hauptelement nach Anspruch 5, **dadurch gekennzeichnet, dass** jeder Modulzahn (18, 19) einen am Stirnende abgerundeten Zahnschaft (20, 22) aufweist und dass bei den Modulzähnen (19) der Zwischenmodule (15) die Stirnenden der Zahnschäfte (22), die an den Modulzähnen (18) der Außenmodule (14) anstoßen, konkave Einwölbungen (24) aufweisen, die die Rundungen an den Stirnenden der Zahnschäfte (20) der Außenmodule (14) formschlüssig übergreifen.

7. Hauptelement nach Anspruch 6, **dadurch gekennzeichnet, dass** jeder Modulzahn (18, 19) an dem vom Rückschlusssegment (16, 17) abgekehrten Ende einen Zahnschuh (21, 23) trägt, der in Umfangrichtung beidseitig über den Zahnschaft (20, 22) vorsteht und eine gleiche axiale Länge aufweist wie der Zahnschaft (20, 22), und dass bei den Modulzähnen (19) der Zwischenmodule (15) das eine Stirnende der Zahnschuhe (23) bis zur tiefsten Stelle der Einwölbung (24) am Zahnschaft (22) zurückversetzt ist.

8. Hauptelement nach einem der vorangehenden Ansprüche, **dadurch gekennzeichnet, dass** die Rückschlusssegmente (17) der beiden Zwischenmodule (15) um gleiche Umfangswinkel zueinander versetzte Aussparungen (25) mit gleichen Abmessungen in Axial- und Umfangsrichtung aufweisen, die von derjenigen Stirnseite der Rückschlusssegmente (17) her eingebracht sind, über die die Modulzähne (19) axial vorstehen, und dass die Aussparungen (25) mittig zwischen den Modulzähnen (19) angeordnet sind.

## Claims

1. Main element, which can be used as a rotor or stator, for an electrical machine, in particular for a small DC motor, having a magnetically permeable body (11) which is composed of SMC material and has a magnetic return ring (12) and radially projecting teeth (13) which are integrally formed on the magnetic return ring (12) and are offset from one another through circumferential angles, with the body (11) comprising a plurality of modules (14, 15) which are manufactured separately and are positioned in an axially aligned manner, of which two modules (14 and 15) are of identical design and, when they are positioned, are rotated in relation to one another through 180° in the plane spanned by the module axes, with two identical modules being arranged on the outside as outer modules (14) and two identical modules being arranged between the outer modules (14) as intermediate modules (15), **characterized in that** regions or portions of the magnetic return segments (17), which form the magnetic return ring (12), of one intermediate module (15), which regions or portions are provided with the module teeth (13, 18), alternately enter cutouts (25) in the respectively other intermediate module (15) in an interlocking manner, with the two outer modules (14) being formed in such a way that, when the two intermediate modules (15) are removed, the two outer modules (14) can be joined to one another to form an axially shortened body (11).

2. Main element according to Claim 1, **characterized in that** the body (11) has a total of exactly four modules.

3. Main element according to either of Claims 1 and 2, **characterized in that** the modules (14, 15) each have an annular magnetic return segment (16, 17), which forms an axial portion of the magnetic return ring (12), and an identical number of module teeth (18, 19) which are offset through the same circumferential angle on the magnetic return segment (16, 17) and project beyond the magnetic return segment (16, 17) axially at one end and form the teeth (13) of the SMC body (11) when the modules (14, 15) are assembled.

4. Main element according to Claim 3, **characterized in that** the number of module teeth (18, 19) on each module (14, 15) is half the number of teeth of the SMC body (11).

5. Main element according to Claim 3 or 4, **characterized in that** in each case one intermediate module (15) is mounted on an outer module (14) such that the module teeth (18, 19) butt against one another in an axially aligned manner and that the outer modules (14) with the mounted intermediate modules (15) are rotated about their module axes relative to one another through an angle of 360°/N, where N is the number of teeth of the SMC body (11).

6. Main element according to Claim 5, **characterized in that** each module tooth (18, 19) has a tooth shaft (20, 22) which is rounded at the end, and **in that**, in the case of the module teeth (19) of the intermediate modules (15), the ends of the tooth shafts (22), which butt against the module teeth (18) of the outer modules (14), have concave recesses (24) which engage over the 'rounded portions at the ends of the tooth shafts (20) of the outer modules (14) in an interlocking manner.

7. Main element according to Claim 6, **characterized in that** each module tooth (18, 19) is provided with a tooth shoe (21, 23) at that end which is averted from the magnetic return segment (16, 17), the said tooth shoe projecting beyond the tooth shaft (20, 22) in the circumferential direction on both sides and having the same axial length as the tooth shaft (20, 22), and **in that**, in the case of the module teeth (19) of the intermediate modules (15), one end of the tooth shoes (23) is recessed as far as the deepest point of the recess (24) in the tooth shaft (22).

8. Main element according to one of the preceding claims, **characterized in that** the magnetic return segments (17) of the two intermediate modules (15) have cutouts (25) of identical dimensions in the axial and circumferential directions which are offset in relation to one another through the same circumferential angle and which are introduced from that end of the magnetic return segments (17) beyond which the module teeth (19) axially project, and **in that** the cutouts (25) are arranged in the centre between the module teeth (19).

## Revendications

1. Elément principal pour machine électrique, utilisable comme rotor ou comme stator, en particulier pour un petit moteur à courant continu, et présentant
un corps magnétiquement conducteur (11) en matériau SMC qui présente une bague de fermeture (12) et des dents (13) formées d'un seul tenant sur la bague de fermeture (12), débordant radialement et décalées angulairement les unes par rapport aux autres à la périphérie,
le corps (11) étant constitué de plusieurs modules (14, 15) fabriqués séparément et placés les uns contre les autres en alignement axial, parmi lesquels deux modules (14 respectivement 15) sont identiques et sont tournés de 180° dans le plan sous-tendu par l'axe du module lorsqu'ils sont placés l'un contre l'autre, deux modules identiques étant disposés comme modules extérieurs (14) situés à l'extérieur et deux modules identiques étant disposés comme modules intermédiaires (15) entre les modules extérieurs (14),
**caractérisé en ce que**
les parties ou zones portant les dents (13, 18) de module des segments de fermeture (17) qui forment la bague de fermeture (12) d'un module intermédiaire (15) s'engagent dans des découpes (25) formées en correspondance géométrique dans l'autre module intermédiaire (15) et
**en ce que** les deux modules extérieurs (14) sont configurés de telle sorte que lorsque les deux modules intermédiaires (15) sont enlevés, les deux modules extérieurs (14) peuvent être rejoints l'un à l'autre pour former un corps (11) raccourci axialement.

2. Elément principal selon la revendication 1, **caractérisé en ce que** le corps (11) présente globalement exactement quatre modules.

3. Elément principal selon la revendication 1 ou 2, **caractérisé en ce que** chacun des modules (14, 15) présente un segment de fermeture (16, 17) de forme annulaire qui forme une partie axiale de la bague de fermeture (12) et un même nombre de dents (18, 19) qui forment lors de l'assemblage des modules (14, 15) les dents (13) du corps (11) en SMC, décalées d'un même angle à la périphérie du segment de fermeture (16, 17) et débordant axialement d'un côté au-delà du segment de fermeture (16, 17).

4. Elément principal selon la revendication 3, **caractérisé en ce que** le nombre des dents (18, 19) de chaque module (14, 15) représente la moitié du nombre de dents du corps (11) en SMC.

5. Elément principal selon la revendication 3 ou 4, **caractérisé en ce qu'**un module intermédiaire (15) est placé sur chaque module extérieur (14) de telle sorte que les dents (18, 19) de module viennent buter les unes contre les autres en alignement axial et **en ce que** les modules extérieurs (14) sur lesquels les modules intermédiaires (15) sont placés sont tournés l'un par rapport à l'autre autour de leur axe de module d'un angle de 360°/N, N étant le nombre des dents du corps (11) en SMC.

6. Elément principal selon la revendication 5, **caractérisé en ce que** chaque dent (18, 19) de module présente une tige de dent (20, 22) arrondie à son extrémité frontale et **en ce que** pour les dents (19) des modules intermédiaires (15), les extrémités frontales des tiges (22) de dent qui viennent buter contre les dents (18) des modules extérieurs (14) présentent des creux (24) qui chevauchent en correspondance géométrique les arrondis des extrémités frontales des tiges (20) de dent des modules extérieurs (14).

7. Elément principal selon la revendication 6, **caractérisé en ce que** chaque dent (18, 19) de module porte sur son extrémité non tournée vers le segment de fermeture (16, 17) un pied (21, 23) de dent qui déborde des deux côtés de la tige (20, 22) de dent dans la direction périphérique et qui présente la même longueur axiale que la tige (20, 22) de dent et **en ce que** pour les dents (19) des modules intermédiaires (15), une des extrémités frontales des pieds (23) de dent est reculée jusqu'à l'emplacement le plus profond du creux (24) ménagé sur la tige (22) de dent.

8. Elément principal selon l'une des revendications précédentes, **caractérisé en ce que** les segments de fermeture (17) des deux modules intermédiaires (15) présentent des découpes (25) de mêmes dimensions dans la direction axiale et la direction périphérique, décalées les unes par rapport aux autres d'un même angle périphérique et ménagées par le côté frontal des segments de fermeture (17) au-dessus duquel les dents (19) de module débordent axialement et **en ce que** les découpes (25) sont disposées au milieu entre les dents (19) de module.
